Europäisches Patentamt

European Patent Office

Office européen des brevets

(19)

(11) Publication number : **0 489 583 A2**

## (12) EUROPEAN PATENT APPLICATION

(21) Application number : **91311264.5**

(51) Int. Cl.⁵ : **G06F 12/08**

(22) Date of filing : **04.12.91**

(30) Priority : **05.12.90 US 634265**

(43) Date of publication of application :
**10.06.92 Bulletin 92/24**

(84) Designated Contracting States :
**DE FR GB**

(71) Applicant : **NCR CORPORATION**
**World Headquarters**
**Dayton, Ohio 45479 (US)**

(72) Inventor : **Tipon, Donald G.**
**13233 Thunderhead Street**
**San Diego CA 92129 (US)**

(74) Representative : **Robinson, Robert George**
**International Patent Department NCR Limited**
**915 High Road North Finchley**
**London N12 8QJ (GB)**

(54) **Multiple processor cache control system.**

(57) A tightly coupled, cache coherent computer system (100) utilizes a crossbar switch (182) to increase memory system and memory bus bandwidth, thus eliminating bottlenecks. Local directories (118,136,154,172), one for each node (174,176,178,180) keep track of valid data and eliminate bottlenecks associated with cache coherency. The system (100) is also scalable, easily allowing expansion by adding further processors, for example.

FIG. 1

EP 0 489 583 A2

This invention relates to tightly coupled computer systems.

Multiple processor computer systems have several processors to increase their throughput. Broadly speaking, tightly coupled computer systems are those in which several processors, usually on separate printed circuit boards, operate nearly independently of each other, while sharing a common memory system. this is in contrast to loosely coupled computer systems, also employing multiple processors, in which the processors do not share a common memory system.

To improve system performance, it is known to use caches (secondary, high speed memories) in conjunction with the shared main slower memory. Each processor may have associated therewith a cache memory which temporarily stores copies of the data that is being accessed by that processor.

US Patent No. 4,622,631 discloses a tightly coupled multiple processor computer system which provides for data coherency, a computer system being termed coherent if the data that are being accessed by a processor are always the last data written to the address of that data. The processors and shared main memory are coupled to a bus, and each processor contains a cache memory. According to this known system, only one of the plurality of processors and addressable main memory is a current owner of an address of a block of data, the current owner having the correct data for the owned address, and the ownership of an address being dynamically changeable among the addressable main memory and the plurality of processors.

US Patent No. 4,755,930 discloses a caching system for a shared bus multiprocessor which includes several processors each with its own private cache memory. A cache coherency scheme is utilized, wherein cache coherence requires that if a processor modifies a copy of the memory location in its cache, that modification must migrate to the main memory or to all the other caches. Alternatively, all the other caches must be invalidated.

It is found that known tightly coupled computer systems, having a cache coherency provision, tend to give rise to system bottlenecks, that is, locations in the system wherein, because of limited information handling capabilities, overall system information transfer rates are reduced.

One type of bottleneck in prior art systems is caused by limited bandwidth in non-parallel memory systems. Another type of bottleneck in prior art systems occurs in the memory bus (between processor and memory), and becomes exacerbated as more processors are added to the system. Finally, the implementation of cache coherency schemes often creates bottlenecks of its own.

It is an object of the present invention to provide a tightly coupled multiple processor computer system having cache coherency, wherein bottleneck problems are minimized, enabling high information transfer to be achieved.

Therefore, according to the present invention, there is provided a tightly coupled system having cache coerency, characterized by: a plurality of nodes having respective processing means and respective memory means connected thereto; a plurality of caches associated with said processing means; and crossbar switching means adapted to directly connect any one of said nodes to any other of said nodes.

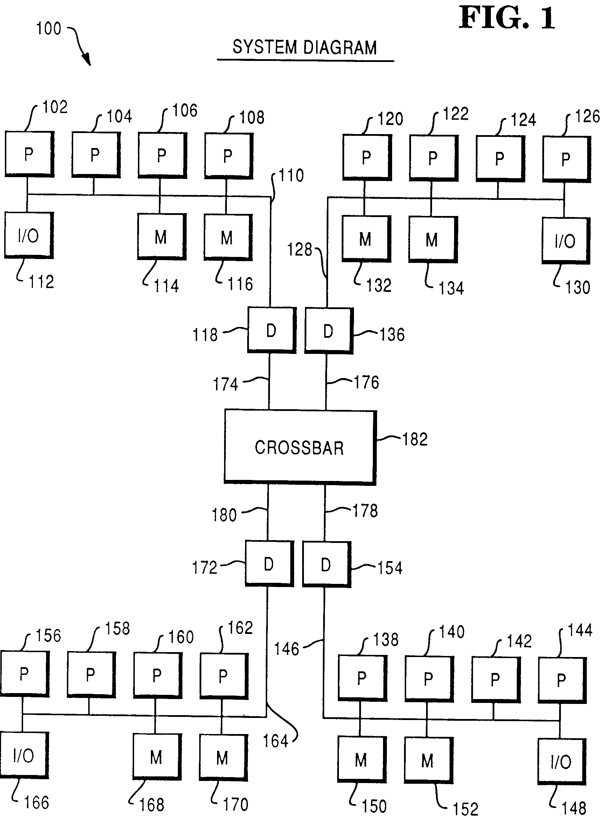

One embodiment of the invention will now be described by way of example, with reference to the accompanying drawing, in which the sole figure shows a schematic block diagram of a tightly coupled computer system according to the invention.

The sole drawing figure shows the preferred embodiment of a multiple-board, tightly coupled computer system 100, which uses a crossbar switch or crossbar 182 to interconnect 4 nodes 174, 176, 178 and 180, although the system 100 is by no means limited to 4 nodes. Each node 174, 176, 178 and 180 has coupled thereto: several processor (P) boards 102-108, 120-126, 138-144, and 156-162, respectively; a connect-disconnect memory bus 110, 128, 146 and 164, respectively; an input/output (I/O) board 112, 130, 148 and 166, respectively; a memory system comprised of two memory (M) boards 114-116, 132-134, 150-152 and 168-170, respectively; and a lookaside cache coherency directory (D) 118, 136, 154 and 172, respectively. The processors P are associated with respective caches (not shown), which may be contained in the processors.

The crossbar 182, by itself, is well known in the art. As is conventional, the crossbar 182 allows direct communication between any two nodes, in response to control logic received from the nodes. For example, node 174 can be directly and exclusively connected to node 178--or to any of the other nodes, for that matter--without having to use a common bus shared by all of the nodes. The same holds true for any other desired connections between the four nodes 174, 176, 178 and 180.

The crossbar 182 is implemented with one or more application specific integrated circuit (ASIC) chips using complementary metal-oxide-semiconductor (CMOS) technology.

The remainder of the description concerns the implementation of the crossbar 182 in the tightly coupled, cache coherent system 100. With this approach, the memory bus (110, 128, 146 and 164) bandwidth is increased, since communication between nodes involves different (and separate) paths rather than a single path.

The operation of the lookaside cache coherency directories 118, 136, 154 and 172 will now be described. Each cache coherency directory D services only the memory on its corresponding node, and determines from a stored processor ID (an 8-bit pointer) whether a memory location requested contains valid or invalid data. Only one agent (processor P or memory M) in the system 100 can be the owner of the valid copy of a cache line, and there is no sharing of data between caches. If the processor ID is zero, for example, the memory on that node is the only owner of the valid copy of the cache line. If the processor ID is not zero, the memory on that node does not contain a valid copy of the cache line, and the processor ID indicates which processor P is the owner of the only valid copy of the cache line.

Once the memory on a node serves the data to a requesting processor P, the corresponding directory D on that node records the processor ID for the cache line address of the requesting processor P. The requesting processor P, having received the data, becomes the exclusive owner of the cache line from whence the data emanated. Should another processor P request the previously mentioned cache line, the directory D connected to the node from which the cache line originated requests the return of the cache line from the owner. The owner then returns the cache line to the directory D and changes its state from valid to invalid. At this time, the directory D updates its stored pointer ID to indicate the new exclusive owner (requesting processor) of the valid data, while sending the valid data to the new owner, and it also writes a copy of the valid data into the memory on its node. It should be noted that when a device requests a memory address via a memory system bus such as bus 110, the device releases the bus once a request has been made, to allow other devices to make requests over the bus before requested data is received by the requesting device.

A cache may replace an unmodified or a modified cache line. Where an unmodified cache line is replaced, since such replacement is not notified to memory, the relevant directory D is unaware of the replacement. However, if the replaced cache line is subsequently requested, the processor P which has replaced the cache line in its cache returns a "null" message to the directory, which indicates to the directory that the true owner of the requested cache line is the memory from which the cache line originated, and the directory responds by adjusting its pointer accordingly.

When a cache replaces modified data, the modified data is returned to the directory D connected to its home memory, and that directory D changes its processor ID to zero, while writing the data into memory.

Each directory D snoops for read and write requests (only to its home memory) from the I/O boards 112, 130, 148 and 166, in the same manner as for each processor P. The same procedure for handling a request from a processor P is followed when handling a request from an I/O board.

For lock memory operations (where a block of memory is locked for use by a single processor), the semaphores (control flags) needed for the operations are stored in the home directories rather than in the processor caches. This provides fast access, but does not create a high level of traffic, since the semaphores are a low percentage of all operations occurring throughout the computer system 100.

Read operations initiated by processors P from different nodes cause other directories D to have copies of the semaphore. To initiate a lock operation, a requesting processor P issues a read-with-intent-to-modify (RIM) message that passes through its cache to the home directory of the cache line, which RIM causes the home directory to broadcast an invalid message to all directories D.

Once a lock operation has begun, the home directory does not allow access to the semaphore until the write operation associated with the lock operation is complete. The home directory issues retry messages to any request to access the semaphore occurring between the read and completion of the write of the lock operation.

The advantages of the preferred embodiment are several. The use of the crossbar 182 approximately increases the memory bus bandwidth available by a factor of n, where n represents the number of nodes. (Likewise, the frequency of use of each memory bus is approximately reduced by a factor of 1/n.). The use of a distributed memory system eliminates memory system bottlenecks associated with many prior art tightly coupled computer systems. By using distributed directories (as opposed to carrying out cache coherency in the processor caches) which handle cache coherency, each directory only snoops for its node rather than for the entire system, which eliminates cache coherency bottlenecks. Also, because of the distributed cache coherency directories, the system is readily scalable, easily allowing the addition of more processors P and I/O interfaces. By not sharing data between caches, the need for broadcasting and validating to all caches is eliminated, which prevents overloading of the crossbar and nodes.

Variations and modifications to the present invention are possible given the above disclosure. For example, the present invention is not limited in scope to the same number of nodes, processors, or memory systems illustrated in the description of the preferred embodiment.

Also, the system 100 could be modified so that the directories D are replaced by a memory resident cache coherency algorithm in each memory system, although the memory system in this case must be designed for the largest anticipated configuration. This alternate design still provides high memory bus and memory system bandwidth, but is not as easily scalable as the preferred embodiment.

## Claims

1. A tightly coupled system having cache coherency, characterized by: a plurality of nodes (174,176,178,180) having respective processing means (102-108;120-126;138-144;156-162) and respective memory means (114,116;132,134; 150,152;168,170) connected thereto; a plurality of caches associated with said processing means (102-108;120-126;138-144;156-162); and crossbar switching means (182) adapted to directly connect any one of said nodes (174,176,178,180) to any other of said nodes (174,176,178,180).

2. A tightly coupled computer system according to claim 1, characterized in that said nodes (174,176,178,180) have respective lookaside directories (118,136,154,172) coupled thereto, each said lookaside directory (e.g. 118) being adapted to control cache coherency for the memory means (e.g. 114,116) connected to the associated node (e.g. 174).

3. A tightly coupled computer system according to claim 1 or claim 2, characterized in that each said lookaside directory (e.g. 118) is adapted to maintain an identification of the location of valid cached data originating from the associated memory means (e.g. 114,116).

4. A tightly coupled computer system according to any one of the preceding claims, characterized in that each node (e.g. 174) is connected to an associated memory system bus (e.g. 110) to which associated data requesting devices, including the associated processing means (e.g. 102-108) are connected, and in that each data requesting device requesting a memory address via an associated memory system bus (e.g. 110) releases that memory system bus (e.g. 110) once a request has been made by a first requesting device, to allow other data requesting devices to make requests over the memory system bus before requested data is received by said first requesting device.

5. A tightly coupled computer system according to any one of claims 2 to 4, characterized in that lookaside directory (e.g. 118) is adapted to store semaphore signals utilized in memory lock operations.

6. A tightly coupled computer system according to any one of the preceding claims, characterized in that said crossbar switching means (182) is implemented by an integrated circuit chip.

# FIG. 1

### SYSTEM DIAGRAM